# EUROPEAN PATENT APPLICATION

(11) **EP 2 775 754 A1**
(43) Date of publication of application: **10.09.2014**
(21) Application number: 12846281.9
(22) Date of filing: 13.09.2012
(51) Int. Cl.: H04W 28/02, H04W 48/08

(54) **CONGESTION INFORMATION NOTIFICATION METHOD AND DEVICE**

(30) Priority: 02.11.2011 CN 201110341378
(71) Applicant: China Academy of Telecommunications Technology, Hai Dian District Beijing 100191 (CN)
(72) Inventor: ZHOU, Yanfei, Beijing 100191 (CN); XU, Hui, Beijing 100191 (CN)
(74) Representative: Körfer, Thomas
(86) International application number: PCT/CN2012/081352
(87) International publication number: WO 2013/063984

(57) **Abstract**

The present invention discloses a method and apparatus for notifying congestion related information. The method includes: obtaining, by an ANDSF entity, congestion related information of an access network; notifying, by the ANDSF entity, the congestion related information to a UE through a message of an ANDSF policy. According to an embodiment of the present invention, by carrying the congestion related information of the access network in the message of the ANDSF policy, the UE can obtain congestion conditions of different access networks, and can select a radio access network to be used according to the congestion conditions, so as to avoid a condition that the UE cannot access the access network since the UE cannot know the network congestion conditions.

## Description

This application claims the benefit and priority of Chinese patent application No. 201110341378.4, entitled "a method and apparatus for notifying congestion related information" filed on November 2, 2011. The entire disclosure of the above application is incorporated herein by reference.

### Field of the Invention

The present invention relates to a communication technology field, and more particularly, to a method and apparatus for notifying congestion related information.

### Background of the Invention

In an Evolved Packet System (EPS) network supporting multi-access, the EPS supports multiple access technologies such as The 3rd Generation Partnership Project (3GPP) access and non-3GPP access technologies, e.g., a Universal Terrestrial Access Network (UTRAN), an Evolved UTRAN (E-UTRAN), a Code Division Multiple Access (CDMA) 2000, a Wireless Local Access Network (WLAN).

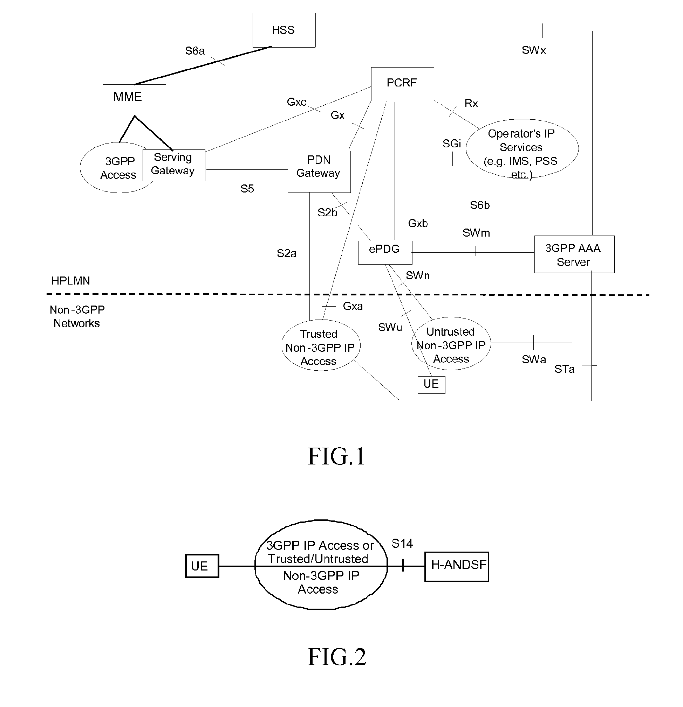

FIG. 1 is a schematic diagram illustrating a multi-access EPS network. When a user equipment (UE) accesses a core network through a 3GPP access technology, a control node of the core network is a Mobility Management Entity (MME) and a gateway node is a Serving Gateway (SGW) and a Packet Data Network (PDN) Gateway (PGW). When accessing the core network through a non-3GPP access technology, the UE accesses the PDN providing a service through the PGW. In particular, if a non-3GPP accessing network is trusted (i.e., a trusted non-3GPP IP access in the figure), the UE can directly access the PGW. If the non-3GPP access network is untrusted (i.e., a untrusted non-3GPP IP access in the figure), according to a security requirement, the UE can access the PGW through an Evolved Packet Data Gateway (ePDG).

In a conventional technology, for the UE supporting multiple access systems, the network can provide information of available radio access systems. The function can be implemented through an Access Network Discovery and Selection Function (ANDSF).

In the present invention, applicants find out that there is a problem as follows in the conventional technology.

In the conventional technology, policies provided by the ANDSF are provided and configured by operators. However, the current UEs cannot know whether congestion happens in a certain kind of access network based on the ANDSF policy.

### Summary of the Invention

A method and apparatus for notifying congestion related information is provided according to embodiments of the present invention, so as to obtain whether congestion happens in an access network according to an ANDSF policy.

In order to implement the invention above, a method for notifying congestion related information is provided according to an embodiment of the present invention, which includes:
obtaining, by an Access Network Discovery and Selection Function (ANDSF) entity, congestion related information of an access network;
notifying, by the ANDSF entity, the congestion related information to a user equipment (UE) through a message of an ANDSF policy.

Another method for notifying congestion related information is provided according to an embodiment of the present invention, which includes:
receiving, by a user equipment (UE), congestion related information of an access network notified by an Access Network Discovery and Selection Function (ANDSF) entity through a message of an ANDSF policy; and
obtaining, by the UE, the congestion related information from the received message of the ANDSF policy.

An Access Network Discovery and Selection Function (ANDSF) entity is provided according to an embodiment of the present invention, which includes:
an obtaining module, to obtain congestion related information of an access network;
an transmitting module, to notify the congestion related information to a user equipment (UE) through a message of an ANDSF policy.

A user equipment (UE) is provided according to an embodiment of the present invention, which includes:
a receiving module, to receive congestion related information of an access network notified by an Access Network Discovery and Selection Function (ANDSF) entity through a message of an ANDSF policy; and
an obtaining module, to obtain the congestion related information from the message of the ANDSF policy.

Comparing with the current technology, the technical solution according to an embodiment of the present invention at least has advantages as follows. By carrying congestion related information of an access network in a message of an ANDSF policy, the UE can obtain congestion conditions of different access networks, and select a radio access network to be used according to the congestion conditions, so as to avoid a condition that the UE cannot access the access network since the UE cannot know the network congestion conditions.

### Brief Description of Drawings

FIG. 1 is a schematic diagram illustrating a multi-access EPS network in a conventional technology;
FIG. 2 is a schematic diagram illustrating an architecture of finding and selecting an access network in a non-roaming scenario in a conventional technology;
FIG. 3 is a schematic diagram illustrating a format of an ISMP in a conventional technology;
FIG. 4 is a schematic diagram illustrating a structure of an ISRP policy in a conventional technology;
FIG. 5 is a schematic diagram illustrating a format of an IFOM policy of an ISRP in a conventional technology;
FIG. 6 is a schematic diagram illustrating a format of an ANDI in a conventional technology;
FIG. 7 is a flowchart illustrating a method for congestion related information according to an embodiment 1 of the present invention;
FIG. 8 is a schematic diagram illustrating a format of an ISMP into which an information element is added according to an embodiment 1 of the present invention;
FIG. 9 is a schematic diagram illustrating a format of an IFOM policy of an ISRP into which an information element is added according to an embodiment 1 of the present invention;
FIG. 10 is a schematic diagram illustrating an ANDI into which an information element is added in a WiMAX access network;
FIG. 11 is a schematic diagram illustrating a structure of an ANDSF entity according to an embodiment 2 of the present invention;
FIG. 12 is a schematic diagram illustrating a structure of a user equipment according to an embodiment 3 of the present invention.

### Detailed Description of the Invention

The present invention will be illustrated in detail hereinafter with reference to the accompanying drawings and specific embodiments.

Applicants find out problems as follows. In an EPS network supporting multi-access, an EPS supports multiply radio access technologies such as 3GPP access and non-3GPP access. For a UE supporting multiply access systems, the network may provide information of available radio access systems. The function may be implemented through an Access Network Discovery and Selection Function (ANDSF) in the network.

FIG. 2 is a schematic diagram illustrating an architecture of finding and selecting an access network in a non-roaming scenario. An ANDSF is a Home ANDSF (H-ANDSF). A UE communicates with the ANDSF through a S14 interface. The UE may obtain information about an access network through the ANDSF. There are two communication methods, i.e., Pull and Push between the UE and the ANDSF, wherein the Pull method is that the UE actively requests the information from the ANDSF, the Push method is that the ANDSF actively pushes the information to the UE.

The ANDSF provides information of finding and selecting a network to the UE based on operator policy, which includes: (1) an Inter-system mobility policy (ISMP), the ISMP is the rule and preference information defined by the operator. This policy defines information, such as whether inter-system mobility is allowed, an access technology type which is most suitable for accessing the Evolved packet core (EPC) and different priorities of different access technologies, wherein the ISMP may be pre-configured in the UE, may be transmitted when the UE makes a request, or may be pushed to the UE by the ANDSF upon a certain trigger.

(2) Access Network Discovery Information (ANDI), the ANDSF may provide to the UE a list of access networks and related parameters such as access technology type (e.g., WLAN, WiMAX), identifier of the radio access network, the frequency of a carrier and so on, wherein the access networks in the list are available and satisfy a requested access type and are in the vicinity of the UE.

(3) An Inter-System Routing Policy (ISRP), the ISRP includes information needed by inter-system routing. For the UE having multiple radio access interfaces, e.g., the UE supporting an IP Flow Mobility (IFOM) or a Multi Access PDN Connectivity (MAPCON), the information may be used to determine which kind of available access network is used to transmit data when a designated route condition is satisfied and which kind of designated access network is prohibited for a designated IP data stream and/or a designated Access Point Name (APN).

The ISRP includes information as follows: (a) for the IFOM, one or more Filter Rules for the IFOM, each Filter Rule identities a prioritized list of access networks that can be used and the access network type that is prohibited when data satisfies a designated IP flow filter. (b) for the MAPCON, one or more Filter Rules, each rule identifies a prioritized list of access networks that can be used and the access network type that is prohibited when the condition that a PDN connection is routed to a designated APN is satisfied. (c) for a non-seamless WLAN offload, one or more Filter Rules, each Filter Rule defines which data uses the non-seamless WLAN offload. In addition, for designated data, the non-seamless WLAN offload may be restricted, or the non-seamless WLAN offload is only used in a designated WLAN access network.

In a conventional specification, it is defined that the ANDSF selects the ISMP, ANDI and ISRP provided to the UE according to a requirement of the operator and a roaming agreement. The ANDSF may provide the above three rules at the same time, or may only provide part of the rules. The ANDSF may interact with some databases in an operator network, e.g., a Home Subscriber Server (HSS), to obtain required information. When receiving information of an available access network with a higher priority than that of the current access network and which is allowed by a user, the UE may perform a process of finding and reselecting the access network with the higher priority. When automatic access network selection is used, the UE cannot access the EPC through an access network indicated as a prohibited access network.

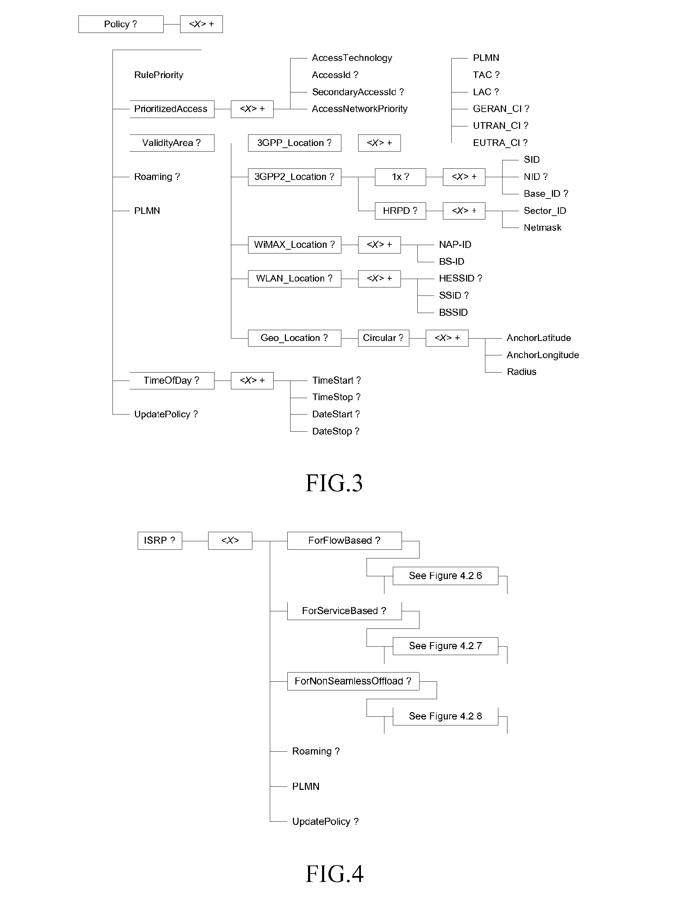

It should be noted that, a format of an ANDSF policy currently defined are respectively (1) for the ISMP, FIG. 3 is a schematic diagram illustrating a format of an ISMP, wherein the ISMP may include one or more rules, a RulePriority defines a priority of a certain rule in the ISMP, a PrioritizedAccess defines a detail access technology (referred as to AccessTechnology), access network identifier (referred as to AccessID) and a priority of the access technology (referred as to AccessNetworkPriority), a UpdatePolicy defines whether the UE is allowed to actively request a updated policy.

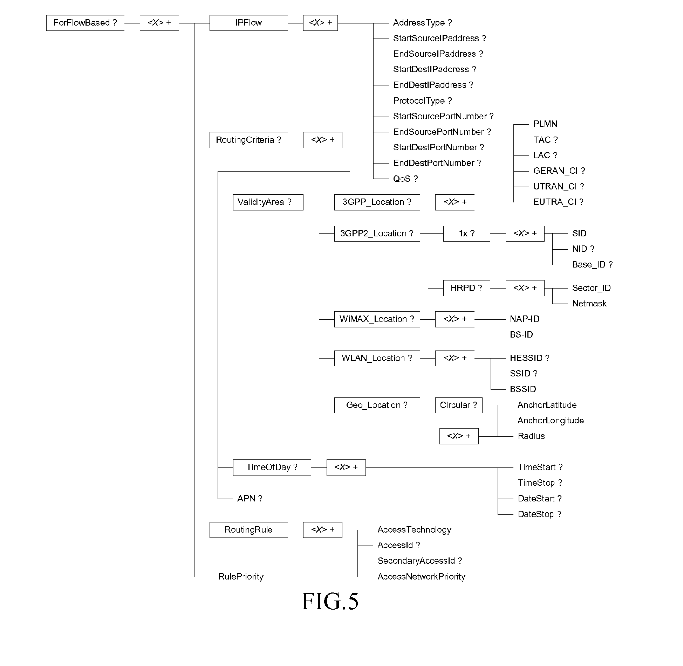

(2) for the ISRP, it may contain policies of the IFOM, MAPCON and the non-seamless WLAN offload. FIG. 4 is a schematic diagram illustrating a structure of an ISRP policy. A policy related with the IFOM is taken as an example. FIG. 5 is a schematic diagram illustrating a format of an IFOM policy of an ISRP. An IPFlow defines an attribute of a specific IP flow. A RoutingCriteria defines a designated area in which the IFOM is allowed to be performed and a designated time etc. A RoutingRule defines the access technology, the access identifier and priority information when the IFOM is performed for a specific IP flow.

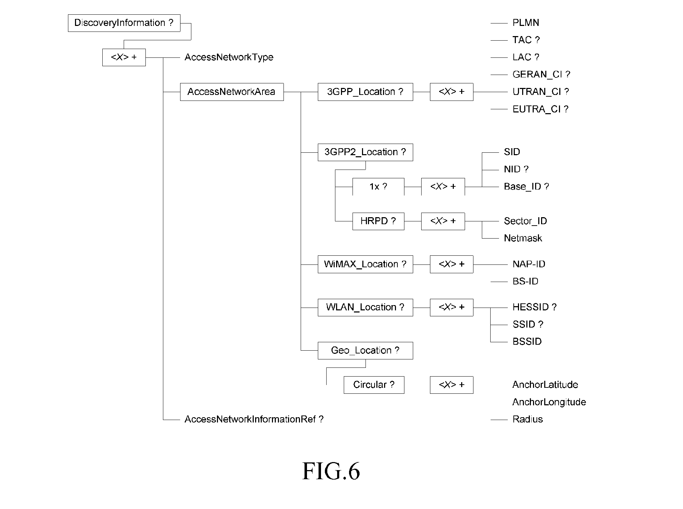

(3) for the ANDI, FIG. 6 is a schematic diagram illustrating a format of an ANDI, the ANDI defines access network information that is available in a designated area, wherein an AccessNetworkType defines the access network type (e.g., WLAN, 3GPP), an AccessNetworkArea defines detail location information, an AccessNetworkInformationRef defines information related with an access network.

In addition, it should be noted that, when congestion happens in a network, a mechanism is needed to protect the network, so as to avoid that more and more UEs accesses the network later to make a network condition worse. In a 3GPP system, congestion control includes two parts, i.e., radio access network congestion control and network congestion control.

The radio access network congestion control includes (1) broadcasting Access Control Barring (ABC) information, which may be ac-BarringInfo information carried in a broadcast message when a base station needs to limit accessing UEs, wherein the information above may include the following information:
ac-BarringFactor ENUMERATED {p00, p05, p10, p15, p20, p25, p30, p40,p50, p60, p70, p75, p80, p85, p90, p95},
ac-BarringTime ENUMERATED {s4, s8, s16, s32, s64, s128, s256, s512},
ac-BarringForSpecialAC BIT STRING (SIZE(5))
wherein the ac-BarringFactor shows a random number from 0 to 1, wherein p00 is equal to 0, p05 is equal to 0.05, p10 is equal to 0.10, ..., p95 is equal to 0.95, the ac-BarringFactor may be any one of the sixteen values, when the ac-BarringInfo is set in the received broadcast message, the UE automatically generates a random number between 0 and 1, if the random number is greater than the value carried in the ac-BarringFactor, the UE is allowed to access the network, otherwise, the UE is prohibited to access the network. Thus, a base station may control a percentage of UEs initiating an access by setting the ac-BarringInfo, so as to control access of UEs according to a condition of network congestion.

(2) that the RAN side rejects a Radio Resource Control (RRC) connection and a channel request message, i.e., the RAN side rejects a RRC connection request from the UE according to a designated indicator (e.g., congestion indication information from a core network).

In addition, the congestion control of a network side is mainly performed through a method of rejecting a Non-Access Stratum (NAS) message of the UE. When congestion happens in the network, a control node of the core network rejects a NAS request of the UE, and optionally carries a backoff time, so that the UE may not initiate an access request in a time period.

According to the process above, it can be known that, the policy provided by the ANDSF is mainly provided and configured by an operator. The ANDSF policy may be different according to available access technologies of different locations and UE information. At present, the ANDSF policy cannot represent congestion related information of the access network. The UE cannot know whether the access network is congestive from the ANDSF policy. Thus, there are the following problems.
(1) According to the ANDSF policy, in a designated area, an access priority of WiMAX is the highest. Thus, when entering the designated area, the UE may select WiMAX access. However, if the WiMAX is congested in a time period, the UE cannot know the congestion related information according to the current ANDSF policy. Thus, the UE will still select WiMAX to access the EPC. Since the access network is in a congestive status, it may be possible that the UE is rejected and cannot obtain service.
(2) According to the ANDSF policy, when a WLAN and an EUTRAN can be used at the same time, a Web service of the UE uses the WLAN to access and other services use the EUTRAN to access. If congestion happens for a WLAN access in a time period, the UE cannot know the WLAN congestion related information according to the current ANDSF policy. When the Web service is used, the UE still selects the WLAN. Thus, the service cannot be obtained and user experience is bad.

Furthermore, since the data service quickly increases and a large amount of Machine to Machine (M2M) UEs emerges, the communication network will confront congestion problem. Since the current EPS system supports multiple types of 3GPP access and multiple types of non-3GPP access, information related with the access network may be provided to the UE via an ANDSF entity.

It can be seen from the above, if the UE can obtain congestion related information of the access network, the problem that the UE cannot access the core network because of congestion can be avoided. Thus, a method and apparatus for notifying congestion related information are provided according to embodiments of the present invention, so that the congestion related information is represented in the ANDSF policy. In other words, by carrying the congestion related information of the access network in the message of the ANDSF policy, the UE can obtain congestion conditions of different access networks from the message of the ANDSF policy, and can select a radio access network to be used according to the congestion conditions, so as to avoid a condition that the UE cannot access the access network since the UE does not know the network congestion conditions.

A technical solution of the present invention will be illustrated in detail hereinafter with reference to the accompanying drawings. Obviously, the described embodiments are only partial embodiments of the present invention, but are not all embodiments. According to the embodiments of the present invention, those skilled in the art can obtain other embodiments without creative labor, which belong to the protection scope of the present invention.

### Embodiment 1

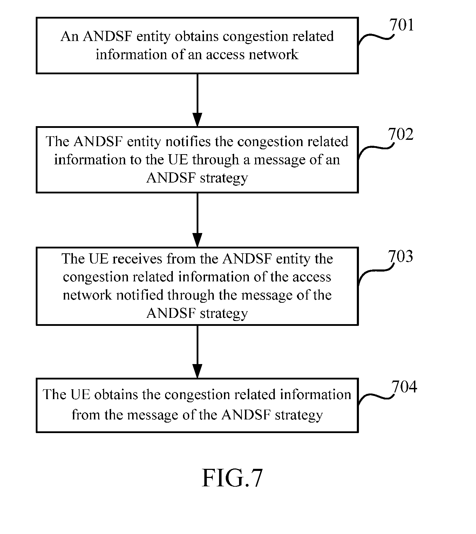

A method for notifying congestion related information is provided according to embodiment 1 of the present invention. As shown in FIG. 7, the method includes procedures as follows.

At block 701, an ANDSF entity obtains congestion related information of the access network.

Way 1: The ANDSF entity may be an application front in a User Data Convergence (UDC) architecture to communicate with a User Data Repository (UDR) in the network. Other entities in the network may also interact with the ANDSF. Thus, the ANDSF entity may obtain the congestion related information of the access network.

Way 2: The ANDSF entity may obtain the congestion related information through a configuration of an operator. After obtaining the congestion related information, the operator configures the congestion related information in the ANDSF entity. Thus, the ANDSF entity may obtain the congestion related information of the access network.

In the embodiment of the present invention, in order to ensure that the congestion related information in the ANDSF entity is synchronized with the congestion related information of the access network, the ANDSF entity may update the congestion related information of the access network with a certain frequency, i.e., the congestion related information of the access network is obtained with a certain time period.

Way 3: The ANDSF entity may obtain the congestion related information through previously interacting with the UE. The UE may report the congestion related information of the access network to the ANDSF entity. The ANDSF entity determines whether the access network enters a congestion status according to the congestion related information respectively reported by multiple UEs.

At block 702, the ANDSF entity notifies the congestion related information to the UE through a message of ANDSF policy.

In the embodiment, an information element indicating the congestion related information (i.e., an information element indicating congestion condition is added into the message of the ANDSF policy for access technology/ access network) may be set in the message of the ANDSF policy, and the information element is used to carry the congestion related information, different values of the information element (i.e., different values of the congestion related information) indicates different congestion levels.

For example, if the value of the information element is equal to 0 (i.e., the congestion related information is equal to 0), it is indicated that the congestion level is high. If the value of the information element is equal to 1 (i.e., the congestion related information is equal to 1), it is indicated that the congestion level is low. In a practical application, the congestion related information may be directly represented in a way such as that the congestion level is high and the congestion level is low.

It should be noted that, since the ANDSF entity may obtain the congestion related information from the network, or obtain the congestion related information through the configuration of the operation. Thus, the ANDSF entity may set values of the information elements above according to congestion conditions of different networks, or set the value of the information element above by a network operator.

In the embodiment of the present invention, the ANDSF entity notifying the congestion related information to the UE through the message of the ANDSF policy includes: the ANDSF entity notifying the updated congestion related information (i.e., active notification) to the UE through the message of the ANDSF policy when the congestion related information of the access network is changed (i.e., the value of the information element of a certain access way/a access network), or the ANDSF entity notifying the current congestion related information (i.e., passive notification) to the UE through the message of the ANDSF policy when the ANDSF entity receives a message of requesting the policy from the UE.

In the embodiment of the present invention, the message of the ANDSF policy includes one or more messages as follows: a message of the ISMP based on the ANDSF policy, a message of the ISRP based on the ANDSF policy, and a message of the ANDI based on the ANDSF policy.

At block 703, the UE receives from the ANDSF entity the congestion related information of the access network notified through the message of the ANDSF policy.

When the congestion related information of the access network changes, the UE receives the updated congestion related information of the access network notified through the message of the ANDSF policy from the ANDSF entity. Alternatively, after transmitting a message of requesting the policy, the UE receives the current congestion related information of the access network notified through the message of the ANDSF policy from the ANDSF entity.

At block 704, the UE obtains the congestion related information from the message of the ANDSF policy.

In the embodiment of the present invention, since an information element representing the congestion related information is set in the message of the ANDSF policy, i.e., the information element is used for carrying the congestion related information, different values of the information element represent different congestion levels. Thus, the UE may obtain the congestion related information in the message of the ANDSF policy.

Furthermore, when receiving the message of the ANDSF policy, the UE may identify the information element representing the congestion related information, and may determine whether a certain radio access network or an access technology is selected according to the information element. An operation corresponding to each information element is based on UE implementation. For example, when the congestion related information of the access network is that the congestion level is high, the UE determines that the access network is not used. When the congestion related information of the access network is that the congestion level is low, the UE determines that the access network is used. A detail UE implementation way may be selected according to an actual requirement, which is not described repeatedly herein.

In order to make the technical solution provided according to the embodiment of the present invention clearer, the technical solution is illustrated in detail accompanying a message of an ISMP based on the ANDSF policy, a message of an ISRP based on the ANDSF policy and a message of an ANDI based on the ANDSF policy.

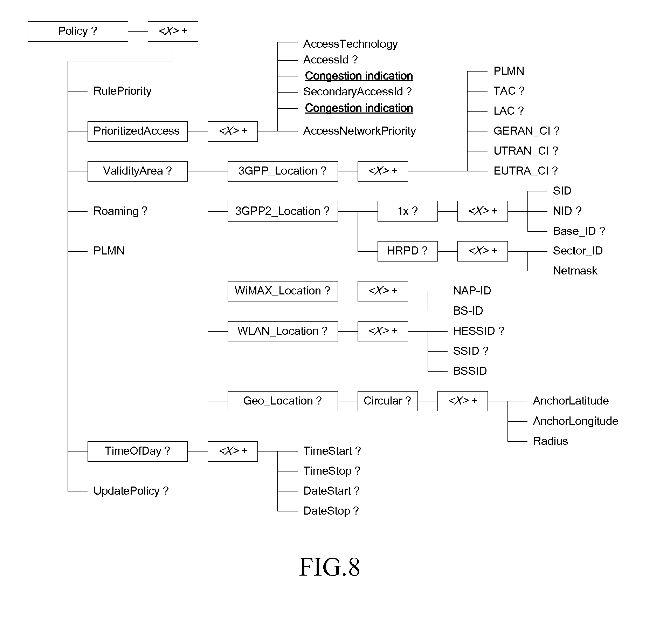

Condition 1: an information element representing congestion related information of an access network is added into the ISMP of the ANDSF policy. FIG. 8 is a schematic diagram illustrating a format of an ISMP into which an information element is added. An AccessTechnology information element defines a detail access technology. An AccessID identifies the access network using the same access technology. A Congestion indication information element is added behind each AccessID, wherein the Congestion indication information element represents the congestion related information of the access network.

In the scenario, according to congestion levels of access networks, corresponding Congestion indication information elements are set with different values. When a value changes, the ANDSF entity may actively update the policy for the UE, or may transmit an updated policy to the UE until the UE makes a request.

Furthermore, when receiving the message of the ISMP, the UE may check a congestion indication corresponding to a certain access network. Based on a value of the information element, the UE may determine whether an access network is selected to be accessed according to a designated policy. It is assumed that the congestion indication corresponding to a WLAN network represents that the network is congestive. The UE may select another access way to access the EPC.

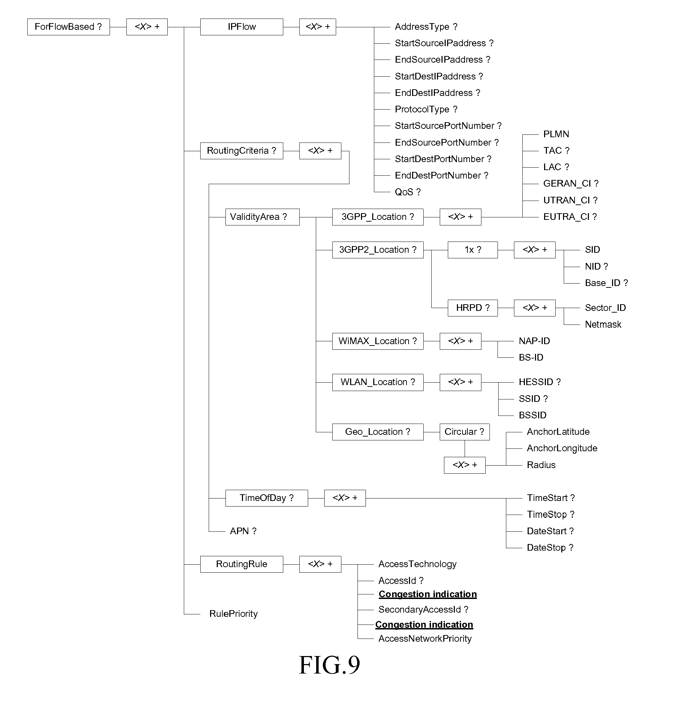

Condition 2: an information element representing the congestion related information of the access network is added into the ISRP of the ANDSF policy. An IFOM policy is taken as an example. FIG. 9 is a schematic diagram illustrating an information element is added in an IFOM policy of an ISRP. A Congestion indication is respectively added behind an AccessID and a Secondary AccessID in a RoutingRule information element, wherein the Congestion indication information element represents the congestion related information of the access network.

In the scenario, according to congestion levels of access networks, corresponding Congestion indication information elements are set with different values. When the value changes, the ANDSF may actively update the policy for the UE, or may transmit a updated policy to the UE until the UE makes a request.

Furthermore, when receiving the ISRP message, the UE may check a congestion indication corresponding to an access network allowed by a designated IP flow. If the network has already congested, an IFOM is not started, i.e., the UE does not use the access network for IP data offload. Otherwise, the UE use the access network to perform the IFOM.

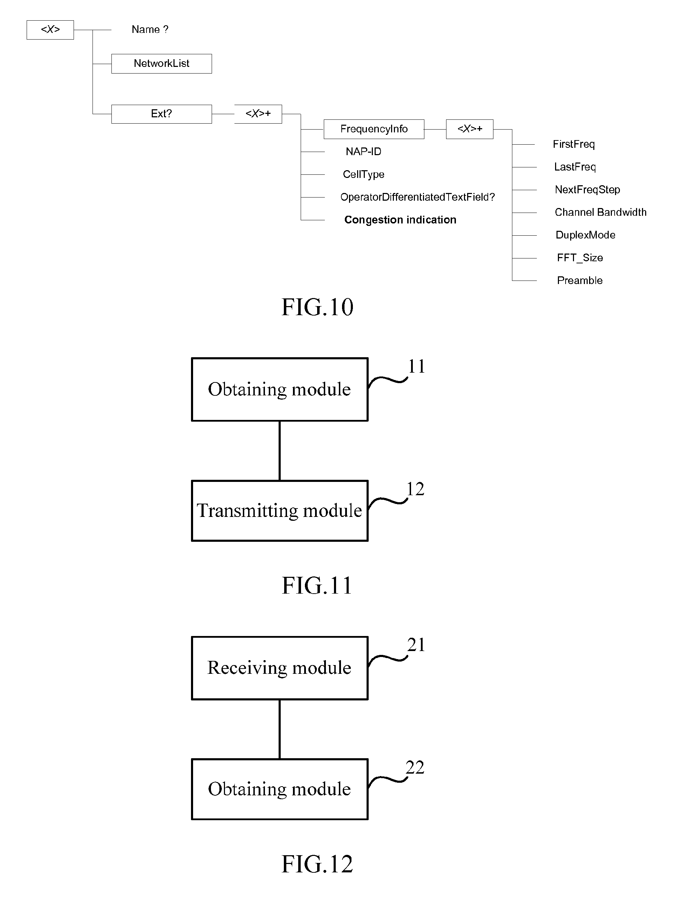

Condition 3: an information element representing congestion related information of an access network is added into the ANDI of the ANDSF policy. An information element is added into AccessNetworkInformationRef of the ANDI. The type of the information element added into the AccessNetworkInformationRef is related with the detail type of the access network. FIG. 10 is a schematic diagram illustrating an ANDI into which an information element is added in a WiMAX access network, wherein a Congestion Indication is a newly-added information element.

In a practical application, the condition 1, the condition 2 and the condition 3 may be combined to be used. In the ANDSF policy, the congestion related information may be added into one or more of the ISMP, the ISRP and the ANDI, a corresponding process of which is not described repeatedly herein.

### Embodiment 2:

According to a same idea with the method above, an ANDSF entity in an access network is provided according to an embodiment of the present invention. As shown in FIG. 11, the ANDSF entity includes the following modules.

An obtaining module 11 is to obtain congestion related information of an access network.

The obtaining module 11 is to obtain the congestion related information through information that the ANDSF entity interacts with a network, or obtain the congestion related information through a configuration of an operator.

A transmitting module 12 is to notify the congestion related information to a UE through a message of an ANDSF policy. An information element is set in the message of the ANDSF policy to represent the congestion related information. Different values of the information element represent different congestion levels.

In the embodiment of the present invention, the transmitting module 12 is to notify the updated congestion related information to the UE through the message of the ANDSF policy when the congestion related information of the access network is changed, or notify the current congestion related information to the UE through the message of the ANDSF policy when receiving a message of requesting the policy from the UE.

In the embodiment of the present invention, the message of the ANDSF policy includes at least one of the following messages: a message of an ISMP based on the ANDSF policy, a message of an ISRP based on the ANDSF policy, a message of an ANDI based on the ANDSF policy.

Various modules in the apparatus according to the present invention may be integrated into an entity, or may be separately deployed. The modules above may be combined into one module, may also be split into a plurality of sub-modules.

### Embodiment 3:

According to a same idea with the method above, a UE is provided according to an embodiment of the present invention. As shown in FIG. 12, the UE includes the following modules.

A receiving module 21 is to receive congestion related information of an access network notified by an ANDSF entity through a message of an ANDSF policy.

The receiving module 21 is to receive the updated congestion related information notified by the ANDSF entity through the message of the ANDSF policy when the congestion related information of the access network is changed, or receive the current congestion related information notified by the ANDSF entity through the message of the ANDSF policy when the UE transmits a message of requesting the policy to the ANDSF entity.

An obtaining module 22 is to obtain the congestion related information from the message of the ANDSF policy.

In the embodiment of the present invention, an information element is set in the message of the ANDSF policy to represent the congestion related information. Different values of the information element represent different congestion levels.

In the embodiment of the present invention, the obtaining module 22 is to obtain the congestion related information from the information element in the message of the ANDSF policy.

In the embodiment of the present invention, the message of the ANDSF policy includes at least one of the following messages: a message of an ISMP based on the ANDSF policy, a message of an ISRP based on the ANDSF policy, a message of an ANDI based on the ANDSF policy.

Various modules in the apparatus according to the present invention may be integrated into an entity, or may be separately deployed. The modules above may be combined into one module, may also be split into a plurality of sub-modules.

According to embodiments above, the skilled in the art may clearly understand that, the present invention may be implemented through software and a necessary general hardware platform, or may be implemented through hardware. In some conditions, the former is a preferable implementation way. Based on the understanding above, an essence of the technical solution of the present invention or a part of the technical solution contributing to a convention technology may be represented by a software produce. The computer software produce is stored in a storage medium, which includes a plurality of instructions to make a computer device (may be a personal computer, a server, or a network device etc.) execute a method according to each embodiment of the present invention.

The skilled in the art may understand that a drawing is a schematic diagram according to a preferable embodiment. A module or a process in the drawing is not necessary for the present invention.

The skilled in the art may understand that various modules in the apparatus may be distributed into an apparatus of an embodiment according to description of the embodiment, may also perform a corresponding change to make the various modules located in one or more apparatuses different from the apparatus of the embodiment. The various modules in the embodiments above may be combined into one module, may also be split into a plurality of sub-modules.

Numbers of the embodiments of the present invention is only to make description clearer, and cannot represent advantages and disadvantages of the embodiments.

The foregoing is only preferred embodiments of the present invention, and the protection scope of the present invention is not limited to this. Any improvement and replacement which can be made in the technical scope disclosed by the present invention by those skilled in the art should be covered in the protection scope of the invention.

## Claims

1. A method for notifying congestion related information, comprising:
obtaining, by an Access Network Discovery and Selection Function (ANDSF) entity, congestion related information of an access network;
notifying, by the ANDSF entity, the congestion related information to a user equipment (UE) through a message of an ANDSF policy.

2. The method of claim 1, wherein the ANDSF entity obtaining the congestion related information of the access network comprises:
obtaining, by the ANDSF entity, the congestion related information through information that the ANDSF entity interacts with a network, or
obtaining, by the ANDSF entity, the congestion related information through configuration of an operator, or
obtaining, by the ANDSF, the congestion related information by interacting with at least one UE.

3. The method of claim 1, wherein an information element is set in the message of the ANDSF policy to represent the congestion related information, and the information element is used to carry the congestion related information.

4. The method of claim 3, wherein different values of the information element represent different congestion levels.

5. The method of claim 1, wherein the ANDSF entity notifying the congestion related information to the UE through the message of the ANDSF policy comprises:
notifying, by the ANDSF, the updated congestion related information to the UE through the message of the ANDSF policy when the congestion related information of the access network is changed; or
notifying, by the ANDSF, the current congestion related information to the UE through the message of the ANDSF policy when the ANDSF entity receives a message of requesting the policy from the UE.

6. The method of any of claims 1, 3, 5, wherein the message of the ANDSF policy comprises at least one of the following messages:
a message of an Inter-system mobility policy (ISMP) based on the ANDSF policy;
a message of an Inter-System Routing Policy (ISRP) based on the ANDSF policy;
a message of an Access Network Discovery Information (ANDI) based on the ANDSF policy.

7. A method for notifying congestion related information, comprising:
receiving, by a user equipment (UE), congestion related information of the access network notified by an Access Network Discovery and Selection Function (ANDSF) entity through a message of ANDSF policy; and
obtaining, by the UE, the congestion related information from the received message of the ANDSF policy.

8. The method of claim 7, wherein the UE receiving the congestion related information of the access network notified by the ANDSF entity through the message of the ANDSF policy comprises:
receiving, by the UE, the updated congestion related information of the access network notified by the ANDSF entity through the message of the ANDSF policy when the congestion related information is changed; or
receiving, by the UE, the current congestion related information of the access network notified by the ANDSF entity through the message of the ANDSF policy after the UE transmits a message of requesting the policy to the ANDSF entity.

9. The method of claim 7 or claim 8, wherein an information element is set in the message of the ANDSF policy to represent the congestion related information, and the information element is used to carry the congestion related information.

10. The method of claim 9, wherein different values of the information element represent different congestion levels.

11. The method of claim 9, wherein the UE obtaining the congestion related information from the message of the ANDSF policy comprises:
obtaining, by the UE, the congestion related information from the information element in the message of the ANDSF policy.

12. The method of claim 7 or claim 8, wherein the message of the ANDSF policy comprises at least one of the following messages:
a message of an Inter-system mobility policy (ISMP) based on the ANDSF policy;
a message of an Inter-System Routing Policy (ISRP) based on the ANDSF policy;
a message of an Access Network Discovery Information (ANDI) based on the ANDSF policy.

13. An Access Network Discovery and Selection Function (ANDSF) entity, comprising:
an obtaining module, to obtain congestion related information of an access network;
an transmitting module, to notify the congestion related information to a user equipment (UE) through a message of an ANDSF policy.

14. The ANDSF entity of claim 13, wherein the obtaining module is to obtain the congestion related information through information that the ANDSF entity interacts with a network, or obtain the congestion related information through configuration of an operator, or obtain the congestion related information by interacting with at least one UE.

15. The ANDSF entity of claim 13, wherein the transmitting module is to notify the updated congestion related information to the UE through the message of the ANDSF policy when the congestion related information of the access network is changed; or
notify the current congestion related information to the UE through the message of the ANDSF policy when the ANDSF entity receives a message of requesting the policy from the UE.

16. A user equipment (UE), comprising:
a receiving module, to receive congestion related information of an access network notified by an Access Network Discovery and Selection Function (ANDSF) entity through a message of an ANDSF policy; and
an obtaining module, to obtain the congestion related information from the message of the ANDSF policy.

17. The UE of claim 16, wherein the receiving module is to receive the updated congestion related information notified by the ANDSF entity through the message of the ANDSF policy when the congestion related information of the access network is changed, or
receive the current congestion related information notified by the ANDSF entity through the message of the ANDSF policy when the UE transmits a message of requesting the policy to the ANDSF entity.

18. The UE of claim 16, wherein the obtaining module is to obtain the congestion related information from the information element in the message of the ANDSF policy.
